(19) Europäisches Patentamt
European Patent Office
Office européen des brevets

(11) **EP 3 067 592 A1**

(12) **EUROPEAN PATENT APPLICATION**
published in accordance with Art. 153(4) EPC

(43) Date of publication:
14.09.2016 Bulletin 2016/37

(51) Int Cl.:
*F16J 15/10* (2006.01)  *F16L 23/036* (2006.01)

(21) Application number: 14859637.2

(22) Date of filing: 28.10.2014

(86) International application number:
**PCT/JP2014/078540**

(87) International publication number:
**WO 2015/068606 (14.05.2015 Gazette 2015/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: 07.11.2013 JP 2013231493

(71) Applicant: **NOK Corporation
Minato-ku
Tokyo 105-8585 (JP)**

(72) Inventor: **YU, Nan
Aso-shi
Kumamoto 869-2231 (JP)**

(74) Representative: **TBK
Bavariaring 4-6
80336 München (DE)**

(54) **GASKET AND SEALING STRUCTURE**

(57) Provided is a gasket and a sealing structure capable of achieving an improvement in sealing performance against the gas having solubility to the rubber material without adversely affecting the assembly workability. A gasket (100) is characterized by including: a gasket main body portion (110) that is compressed toward an opposing surface (620) by an end surface (510) in a device (500); a first annular convex portion (120) that protrudes from the gasket main body portion (110) toward the device (500), is compressed toward the opposing surface (620) by a chamfered portion (530), and is constituted by a curved surface tapered toward a tip thereof; and a second annular convex portion (130) that protrudes from the gasket main body portion (110) to an inner peripheral surface side, and is compressed toward radially outwardly by a body portion (610).

*Fig. 2*

EP 3 067 592 A1

**Description**

TECHNICAL FIELD

The present invention relates to a gasket and a sealing structure for preventing leakage of gas having solubility to a rubber material such as CFC gas or hydrogen gas.

BACKGROUND ART

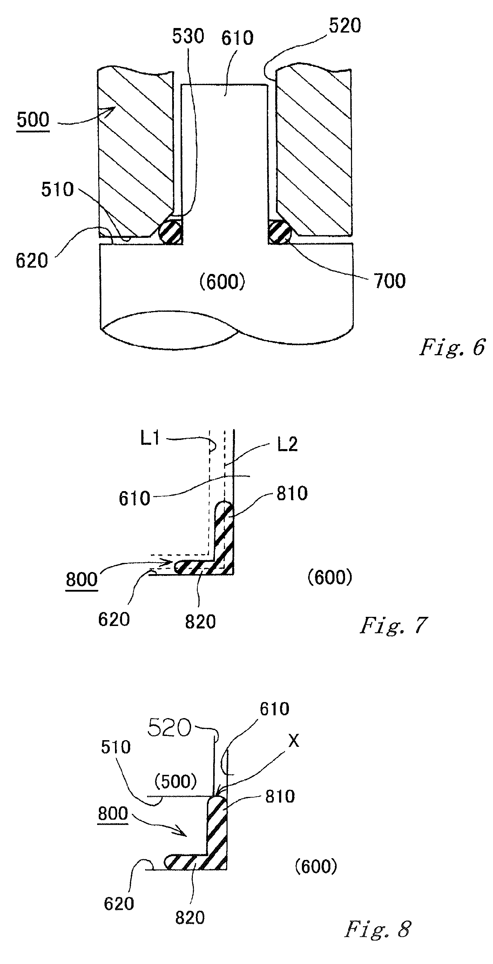

A gasket is provided at a place to which pipe for supplying gas is mounted in order to prevent gas leakage (see Patent Literatures 1 and 2). With reference to Fig. 6, a sealing structure according to a conventional example will be described. Fig. 6 is a schematic cross-sectional view of the sealing structure according to the conventional example.

In a device 500 to which pipe 600 is mounted, an insertion hole 520 is provided which is opened in an end surface 510 on a side to which the pipe 600 is mounted. In addition, in the pipe 600, a body portion 610 which is inserted into the insertion hole 520, and an opposing surface 620 which opposes the end surface 510 in the device 500 are provided. Further, a chamfered portion 530 is provided between the end surface 510 and an inner peripheral surface of the insertion hole 520 in the device 500. A rubber gasket 700 is fitted in an annular gap having a substantially triangular cross section which is formed by the chamfered portion 530, the body portion 610, and the opposing surface 620. In general, an O ring having a circular cross section is used as the gasket 700.

With the configuration described above, it is possible to prevent gas supplied into the device 500 from the pipe 600 from leaking to the outside through a gap between the body portion 610 and the insertion hole 520.

However, in the case where the gas supplied by the pipe is CFC gas or hydrogen gas, the gas has solubility to a rubber material. In this case, the gas may be transmitted through the gasket and leak to the outside. In the case where the transmission quantity of the gas transmitted through the rubber gasket is q, the diffusion coefficient of the rubber material is D, the solubility coefficient of the rubber material is S, a gas pressure difference between the inside and the outside of the gasket is $P_a - P_b$, the transmission area of the gasket is A, the transmission length of the gasket is L, and time is t, the following expression is satisfied.

$$q = D \times S \times (P_a - P_b) \times (A \div L) \times t$$

Consequently, in order to reduce the transmission quantity q by changing the shape of the gasket, $(A \div L)$ may be reduced appropriately. In order to realize this, it is conceivable to form the cross-sectional shape of the gasket into an L-shaped cross section. However, in this case, although the transmission quantity q can be reduced, another problem may arise. This point will be described with reference to Figs. 7 and 8. Each of Figs. 7 and 8 is a schematic cross-sectional view showing the sealing structure according to an imaginary technique.

A gasket 800 shown in the drawings includes a cylindrical portion 810 which seals an annular gap between the insertion hole 520 of the device 500 and the body portion 610 of the pipe 600, and a flat portion 820 that seals a gap between the end surface 510 of the device 500 and the opposing surface 620 of the pipe 600. Accoedingly, the cross section of the gasket 800 (a cross section including the central axis) is L-shaped. According to the thus configured gasket 800, it is possible to reduce the transmission area A and increase the transmission length L, thereby making it possible to reduce $(A \div L)$.

However, in the case of this imaginary technique, a problem arises that it is difficult to stably maintain sealing performance, and that assembly workability is poor. That is, as shown in Fig. 7, due to dimensional deviations, the relative position of the device 500 with respect to the pipe 600 may be the position indicated by L1 in Fig. 7, in this case a gap is formed, or the position indicated by L2 in Fig. 7, in this case there is a possibility that the gasket 800 is excessively compressed and damaged. Consequently, it is necessary to increase positioning accuracy between the device 500 and the pipe 600 and dimensional accuracy of the gasket 800, otherwise it becomes difficult to stably maintain the sealing performance. In addition, a problem also arises that, when the body portion 610 of the pipe 600 is inserted into the insertion hole 520 of the device 500, the end edge of an opening portion of the insertion hole 520 may abut on the gasket 800 (see an arrow X in Fig. 8), and thus the assembly workability is poor.

CITATION LIST

PATENT LITERATURE

Patent Literature 1: Japanese Patent Application Laid-open No. 2007-170570
Patent Literature 2: Japanese Patent Application Laid-open No. 2001-165320

SUMMARY OF INVENTION

TECHNICAL PROBLEM

An object of the present invention is to provide a gasket and a sealing structure capable of achieving an improvement in sealing performance against the gas having solubility to the rubber material without adversely affecting the assembly workability.

SOLUTION TO PROBLEM

The present invention has adopted the following means in order to solve the above problems.

The gasket of the present invention is a gasket, that is annular and made of rubber, for preventing gas leakage by sealing a gap between a first member and a second member, the first member having an end surface and an insertion hole opened in the end surface and being formed with a chamfered portion between the end surface and an inner peripheral surface of the insertion hole, the second member having an opposing surface opposing the end surface and a body portion inserted into the insertion hole, the gasket including:

a gasket main body portion that is compressed toward the opposing surface by the end surface in the first member;
a first annular convex portion that protrudes from the gasket main body portion toward the first member, is compressed toward the opposing surface by the chamfered portion, and is constituted by a curved surface tapered toward a tip thereof; and
a second annular convex portion that protrudes from the gasket main body portion to an inner peripheral surface side, and is compressed toward radially outwardly by the body portion.

In addition, the sealing structure of the present invention is a sealing structure including:

a first member having an end surface and an insertion hole opened in the end surface and being formed with a chamfered portion between the end surface and an inner peripheral surface of the insertion hole;
a second member having an opposing surface opposing the end surface and a body portion inserted into the insertion hole; and
a gasket that is annular and made of rubber, and seals a gap between the first member and the second member to prevent gas leakage,
wherein the gasket comprises:

a gasket main body portion that is compressed toward the opposing surface by the end surface in the first member;
a first annular convex portion that protrudes from the gasket main body portion toward the first member, is compressed toward the opposing surface by the chamfered portion, and is constituted by a curved surface tapered toward a tip thereof; and
a second annular convex portion that protrudes from the gasket main body portion to an inner peripheral surface side, and is compressed toward radially outwardly by the body portion.

According to these aspects of the invention, not only the portion compressed by the chamfered portion (the first annular convex portion) and the portion compressed by the body portion (the second annular convex portion) but also the gasket main body portion compressed by the end surface in the first member is provided. Consequently, as compared with the case of the gasket such as an O ring which is fitted in an annular gap having a substantially triangular cross section, it is possible to reduce the transmission area A of the gas through the gasket and increase the transmission length L. Accordingly, it becomes possible to reduce the transmission quantity of the gas which is transmitted through the gasket to prevent the gas leakage.

In addition, the first annular convex portion compressed by the chamfered portion is constituted by the curved surface tapered toward the tip. Consequently, in the process of assembling the first member and the second member, a space is formed, within a space formed by the chamfered portion, the body portion, and the opposing surface, into which the first annular convex portion enters when the first annular convex portion is deformed. Accordingly, an appropriate compressibility of the first annular convex portion can be maintained, thereby making it possible to maintain a stable sealing performance even when a positional relationship between the first member and the second member and dimensional accuracy of the gasket vary to some extent. In addition, workability during the first member and the second member are assembled is not adversely affected.

Herein, the gasket main body portion may be compressed by an annular member disposed between the opposing surface and the gasket main body portion or an annular protruding portion formed on the opposing surface, and the end surface in the first member, and the gasket may further comprise a third annular convex portion that protrudes from the gasket main body portion toward an annular gap between the body portion and the annular member or the annular protruding portion, and is spaced apart from the opposing surface in a state before being compressed by the first member, and comes into close contact with the opposing surface when compressed by the first member.

Accordingly, when the first annular convex portion is compressed, a large compressive force does not act on the first annular convex portion until the third annular convex portion abuts on the opposing surface, and hence it is possible to further prevent the first annular convex portion from being excessively compressed.

ADVANTAGEOUS EFFECTS OF INVENTION

As described thus far, according to the present invention, it becomes possible to achieve the improvement in sealing performance against the gas having solubility to the rubber material without adversely affecting the assembly workability.

BRIEF DESCRIPTION OF DRAWINGS

Fig. 1 is a partially cutaway cross-sectional view of a gasket according to Example 1 of the present invention.
Fig. 2 is a schematic cross-sectional view showing a sealing structure according to Example 1 of the present invention.
Fig. 3 is a partially cutaway cross-sectional view of a gasket according to Example 2 of the present invention.
Fig. 4 is a schematic cross-sectional view showing a sealing structure according to Example 2 of the present invention.
Fig. 5 is a schematic cross-sectional view showing a sealing structure according to a modification of Example 2 of the present invention.
Fig. 6 is a schematic cross-sectional view of a sealing structure according to a conventional example.
Fig. 7 is a schematic cross-sectional view showing a sealing structure according to an imaginary technique.
Fig. 8 is a schematic cross-sectional view showing the sealing structure according to the imaginary technique.

DESCRIPTION OF EMBODIMENTS

Hereinafter, modes for carrying out the present invention will be exemplarily described in detail based on examples thereof with reference to the drawings. However, the dimensions, materials, shapes, relative arrangements and so on of constituent parts described in the examples are not intended to limit the scope of the present invention to these alone in particular unless specifically described. In Examples described below, a description will be given of the case of a sealing structure in which a gasket for preventing gas leakage is provided at a place to which pipe for supplying gas is mounted. However, the present invention is not limited to the mounting portion of the pipe, but can also be applied to a gasket and a sealing structure that seal a gap between two members (a first member and a second member) provided in various devices.

(Example 1)

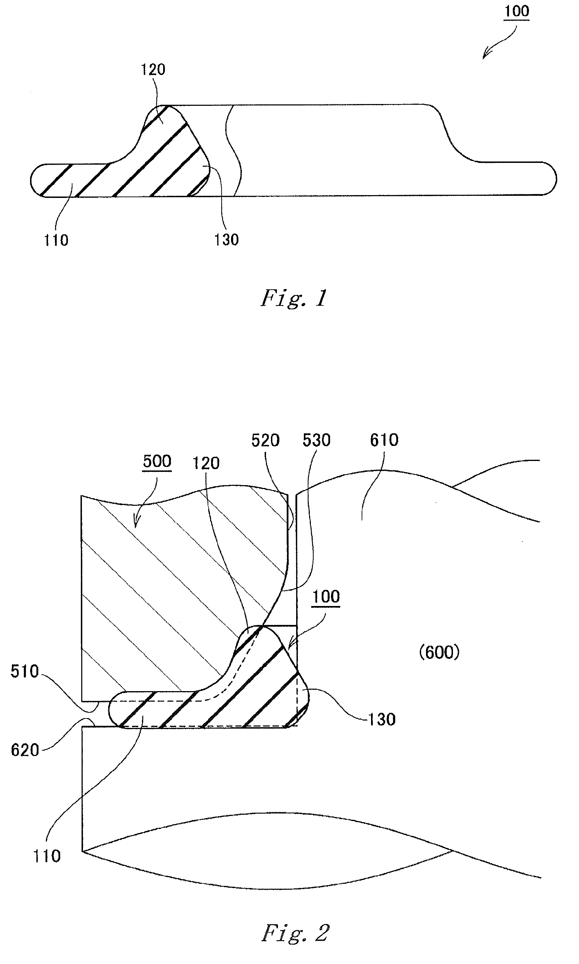

With reference to Figs. 1 and 2, a gasket and a sealing structure according to Example 1 of the present invention will be described. Fig. 1 is a partially cutaway cross-sectional view of the gasket according to Example 1 of the present invention. Fig. 2 is a schematic cross-sectional view showing the sealing structure according to Example 1 of the present invention.

<Gasket>

With reference to Fig. 1 in particular, a gasket 100 according to the present Example will be described. The gasket 100 according to the present Example is suitably used for preventing leakage of gas having solubility to a rubber material such as CFC gas or hydrogen gas. The gasket 100 is constituted by an annular member made of rubber.

The gasket 100 is constituted by an annular and flat gasket main body portion 110, a first annular convex portion 120 which protrudes from the gasket main body portion 110 in an upward direction in Fig. 1, and a second annular convex portion 130 which protrudes from the gasket main body portion 110 to an inner peripheral surface side. The first annular convex portion 120 is constituted by a curved surface which protrudes toward a tip thereof. More specifically, the first annular convex portion 120 is configured such that its outer peripheral surface side is constituted by a tapered surface of which the diameter is reduced with approach to the tip, its inner peripheral surface side is constituted by another tapered surface of which the diameter is increased with approach to the tip, and intersecting portions of the pair of the tapered surfaces are connected to each other with a curved surface having an arc-shaped cross section. Further, as a specific example, the taper angle of the tapered surface of the outer peripheral surface side of the first annular convex portion 120 can be set to 40 degrees, and the taper angle of the tapered surface of the inner peripheral surface side can be set to 60 degrees. In addition, a tip of the second annular convex portion 130 is also preferably formed into a curved surface having an arc-shaped cross section. The present Example adopts a configuration in which the curved surface having the arc-shaped cross section in the second annular convex portion 130 and the tapered surface of the inner peripheral surface side in the first annular convex portion 120 are connected to each other without a step.

<Sealing structure>

With reference to Fig. 2 in particular, the sealing structure according to the present Example will be described. The sealing structure according to the present Example is the structure in which the gasket 100 is provided at a place of a device 500 as the first member to which a pipe 600 as the second member is mounted. In Fig. 2, a state of the gasket 100 before deformation is shown in order to clarify the dimensional relationship among the gasket 100, the device 500, and the pipe 600.

Hereinbelow, the sealing structure will be described in greater detail. In the device 500 to which the pipe 600 is mounted, an insertion hole 520 which is formed in an end surface 510 on a side to which the pipe 600 is mounted is provided. In addition, in the pipe 600, a body portion 610 which is inserted into the insertion hole 520 and an opposing surface 620 which opposes the end surface 510 in the device 500 are provided. In the present Example, the body portion 610 and the portion provided with the opposing surface 620 in the pipe 600 are integrally provided. However, the opposing surface 620 may be provided in another member different from the body portion 610 by fixing the other member to the body portion 610.

Each of an outer peripheral surface of the body portion 610 and an inner peripheral surface of the insertion hole 520 is constituted by a cylindrical surface. In addition, a chamfered portion 530 is provided between the end surface 510 and the inner peripheral surface of the insertion hole 520 in the device 500. The chamfered portion 530 is constituted by a tapered surface of which the diameter is reduced with approach to the inside of the insertion hole 520 from the end surface 510.

The gasket main body portion 110 in the gasket 100 is compressed toward the opposing surface 620 of the pipe 600 by the end surface 510 of the device 500. In the present Example, the gasket main body portion 110 is compressed by the end surface 510 and the opposing surface 620. The first annular convex portion 120 in the gasket 100 is configured to protrude from the gasket main body portion 110 toward the device 500. The first annular convex portion 120 is compressed toward the opposing surface 620 of the pipe 600 by the chamfered portion 530 of the device 500. In the present Example, the first annular convex portion 120 is compressed by the chamfered portion 530 and the opposing surface 620. The inner diameter of the tip of the second annular convex portion 130 in the gasket 100 is set to be smaller than the outer diameter of the body portion 610 of the pipe 600. Accordingly, the second annular convex portion 130 is compressed to an outer side in a radial direction by the body portion 610. Note that the second annular convex portion 130 exerts not only sealing performance with respect to the outer peripheral surface of the body portion 610 but also a function of preventing the gasket 100 from falling off from the body portion 610 in a state before the pipe 600 is mounted to the device 500.

<Advantages of gasket and sealing structure of present Example>

According to the gasket 100 of the present Example, not only the portion compressed by the chamfered portion 530 of the device 500 (the first annular convex portion 120) and the portion compressed by the body portion 610 of the pipe 600 (the second annular convex portion 130) but also the gasket main body portion 110 compressed by the end surface 510 of the device 500 is provided. Consequently, as compared with the case of the gasket such as an O ring which is fitted in an annular gap having a substantially triangular cross section, it is possible to reduce a transmission area A of the gas through the gasket 100, and increase a transmission length L. Accordingly, it becomes possible to reduce the transmission quantity of the gas which is transmitted through the gasket 100 to prevent gas leakage.

In addition, the first annular convex portion 120 compressed by the chamfered portion 530 of the device 500 is configured by the curved surface which is tapered toward the tip. Accordingly, a gap is secured in between the first annular convex portion 120, the chamfered portion 530, and the body portion 610. Consequently, in the process of mounting the pipe 600 to the device 500 (the process of assembling), a space is formed, within the space formed by the chamfered portion 530, the body portion 610, and the opposing surface 620, into which the first annular convex portion 120 enters when the first annular convex portion 120 is deformed. Accordingly, an appropriate compressibility of the first annular convex portion 120 can be maintained, and a filling ratio of the gasket 100 in the space formed by the chamfered portion 530, the body portion 610, and the opposing surface 620 is maintained appropriately. Consequently, even when a positional relationship between the device 500 and the pipe 600 and dimensional accuracy of the gasket 100 vary to some degree, stable sealing performance is maintained. In addition, workability when the device 500 and the pipe 600 are assembled is not adversely affected.

Thus, according to the gasket 100 and the sealing structure of the present Example, it becomes possible to achieve an improvement in sealing performance against the gas having solubility to the rubber material without adversely affecting assembly workability.

(Example 2)

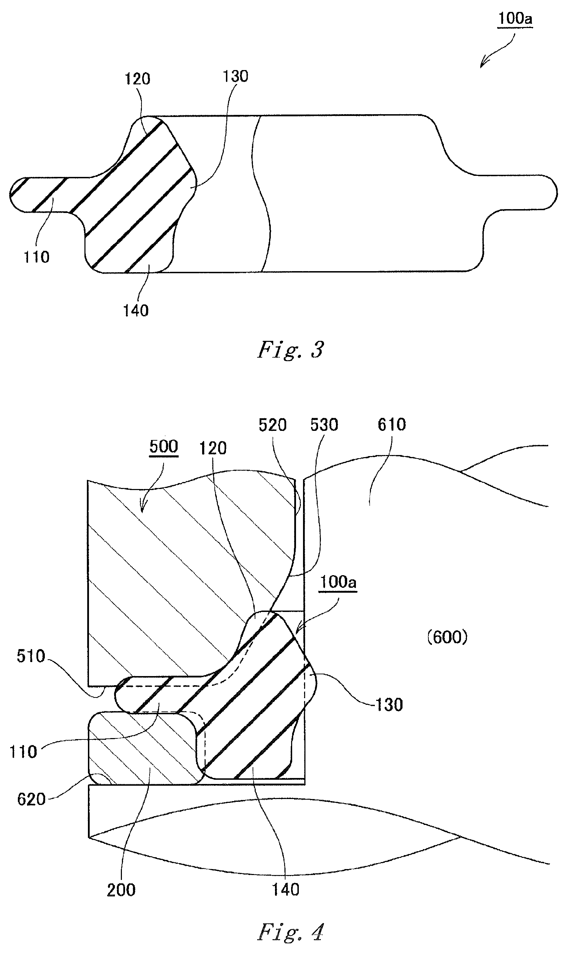

Example 2 of the present invention is shown in Figs. 3 and 4. In the gasket and the sealing structure according to the present Example as well, the basic configuration and functions thereof are the same as those in Example 1, and hence the same constituent parts are designated by the same reference numerals as those in Example 1, and the description thereof will be appropriately omitted. Fig. 3 is a partially cutaway cross-sectional view of the gasket according to Example 2 of the present invention. Fig. 4 is a schematic cross-sectional view showing the sealing structure according to Example 2 of the present invention.

<Gasket>

With reference to Fig. 3 in particular, a gasket 100a according to the present Example will be described. Similarly to the case of Example 1, the gasket 100a according to the present Example is suitably used for preventing leakage of gas having solubility to a rubber material such as CFC gas or hydrogen gas. In addition, similarly to the case of Example 1, the gasket 100a is constituted by an annular member made of rubber.
Similarly to the case of Example 1, the gasket 100a includes the gasket main body portion 110, the first annular convex portion 120, and the second annular convex portion 130. The configurations thereof are the same as those in the case of Example 1 described above, and hence the description thereof will be omitted. In the gasket 100a according to the present Example, a third annular convex portion 140 is provided which protrudes from the gasket main body portion 110 in a downward direction in Fig. 3.

<Sealing structure>

With reference to Fig. 4 in particular, the sealing structure according to the present Example will be described. Similarly to the case of Example 1 described above, the sealing structure according to the present Example is also the structure in which the gasket 100a is provided at the portion of the device 500 as the first member to which the pipe 600 as the second member is mounted. In Fig. 4, a state of the gasket 100a before deformation is shown in order to clarify the dimensional relationship among the gasket 100a, the device 500, and the pipe 600.

The configuration of the device 500 and the configuration of the pipe 600 are the same as those in Example 1 described above, and hence the description thereof will be omitted. In the present Example, an annular member 200 is disposed between the opposing surface 620 in the pipe 600 and the gasket main body portion 110 of the gasket 100a. The annular member 200 is formed of a metal or a resin material so as to prevent the transmission of CFC gas or hydrogen gas.

The gasket main body portion 110 in the gasket 100a according to the present Example is compressed toward the opposing surface 620 of the pipe 600 by the end surface 510 of the device 500. In the present Example, the gasket main body portion 110 is compressed by the end surface 510 and the annular member 200. In addition, the first annular convex portion 120 in the gasket 100a is configured to protrude from the gasket main body portion 110 toward the device 500. Further, the first annular convex portion 120 is compressed toward the opposing surface 620 of the pipe 600 by the chamfered portion 530 of the device 500. The inner diameter of the tip of the second annular convex portion 130 in the gasket 100a is set to be smaller than the outer diameter of the body portion 610 of the pipe 600. Accordingly, the second annular convex portion 130 is compressed to the outer side in the radial direction by the body portion 610. Note that the second annular convex portion 130 exerts not only the sealing performance with respect to the outer peripheral surface of the body portion 610 but also a function of preventing the gasket 100 from falling off from the body portion 610 in a state before the pipe 600 is mounted to the device 500.

In the gasket 100a according to the present Example, the third annular convex portion 140 which protrudes from the gasket main body portion 110 toward an annular gap between the body portion 610 of the pipe 600 and the annular member 200 is provided. The third annular convex portion 140 is configured to be spaced apart from the opposing surface 620 in the pipe 600 in a state before the gasket 100a is compressed by the device 500, and come into close contact with the opposing surface 620 when the gasket 100a is compressed by the device 500. Consequently, the portion provided with the first annular convex portion 120 and the portion provided with the third annular convex portion 140 in the gasket 100a are compressed by the chamfered portion 530 in the device 500 and the opposing surface 620 in the pipe 600. Note that the outer diameter of the third annular convex portion 140 is set to be larger than the inner diameter of the annular member 200. Accordingly, by fitting the annular member 200 to the gasket 100a, it becomes possible to handle these portions as one part.

In the thus configured gasket 100a and sealing structure according to the present Example as well, it is possible to obtain the same functions and effects as those in the case of Example 1 described above. In addition, in the case of the present Example, when the first annular convex portion 120 is compressed, a large compressive force does not act on the first annular convex portion 120 until the third annular convex portion 140 abuts on the opposing surface 620. Consequently, as compared with the case of Example 1, it is possible to further prevent the first annular convex portion 120 from being excessively compressed.

(Modification)

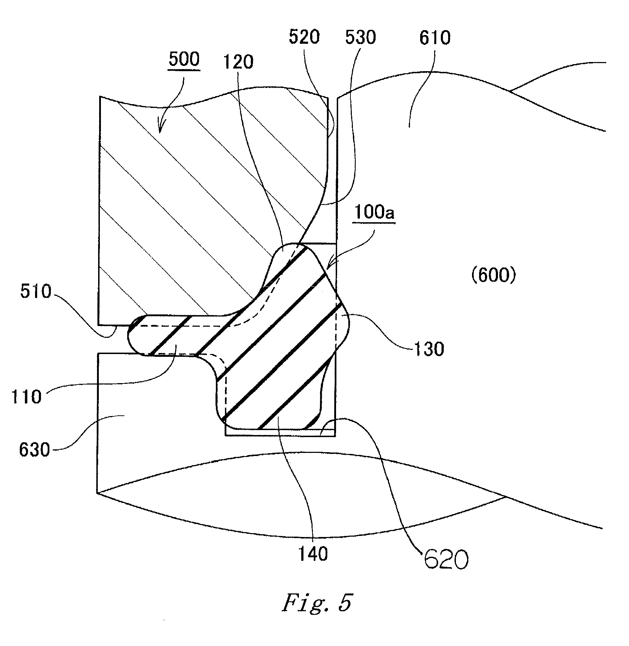

With reference to Fig. 5, a modification of Example 2 described above will be described. Fig. 5 is a schematic cross-sectional view showing the sealing structure according to the modification of Example 2 of the present invention. In this modification, instead of the annular member 200 in Example 2 described above, an annular protruding portion 630 which protrudes toward the device 500 is formed on the opposing surface 620 in the pipe 600. Note that the configuration other than the configuration in which the annular protruding portion 630 is provided instead of the annular member 200 is the same as that described in Example 2. It will be easily appreciated that the same functions and effects as those in the case of Example 2 described above can be obtained in the present Example as well.

REFERENCE SIGNS LIST

| | |
|---|---|
| 100, 100a: | Gasket |
| 110: | Gasket main body |
| 120: | First annular convex portion |
| 130: | Second annular convex portion |
| 140: | Third annular convex portion |
| 200: | Annular member |
| 500: | Device |
| 510: | End surface |
| 520: | Insertion hole |

530:        Chamfered portion
600:        Pipe
610:        Body portion
620:        Opposing surface
630:        Annular protruding portion

**Claims**

1.  A gasket, that is annular and made of rubber, for preventing gas leakage by sealing a gap between a first member and a second member, the first member having an end surface and an insertion hole opened in the end surface and being formed with a chamfered portion between the end surface and an inner peripheral surface of the insertion hole, the second member having an opposing surface opposing the end surface and a body portion inserted into the insertion hole, the gasket comprising:

    a gasket main body portion that is compressed toward the opposing surface by the end surface in the first member;
    a first annular convex portion that protrudes from the gasket main body portion toward the first member, is compressed toward the opposing surface by the chamfered portion, and is constituted by a curved surface tapered toward a tip thereof; and
    a second annular convex portion that protrudes from the gasket main body portion to an inner peripheral surface side, and is compressed toward radially outwardly by the body portion.

2.  The gasket according to claim 1, wherein the gasket main body portion is compressed by an annular member disposed between the opposing surface and the gasket main body portion or an annular protruding portion formed on the opposing surface, and the end surface in the first member, and the gasket further comprises a third annular convex portion that protrudes from the gasket main body portion toward an annular gap between the body portion and the annular member or the annular protruding portion, and is spaced apart from the opposing surface in a state before being compressed by the first member, and comes into close contact with the opposing surface when compressed by the first member.

3.  A sealing structure comprising:

    a first member having an end surface and an insertion hole opened in the end surface and being formed with a chamfered portion between the end surface and an inner peripheral surface of the insertion hole;
    a second member having an opposing surface opposing the end surface and a body portion inserted into the insertion hole; and
    a gasket that is annular and made of rubber, and seals a gap between the first member and the second member to prevent gas leakage, wherein the gasket comprises:

    a gasket main body portion that is compressed toward the opposing surface by the end surface in the first member;
    a first annular convex portion that protrudes from the gasket main body portion toward the first member, is compressed toward the opposing surface by the chamfered portion, and is constituted by a curved surface tapered toward a tip thereof; and
    a second annular convex portion that protrudes from the gasket main body portion to an inner peripheral surface side, and is compressed toward radially outwardly by the body portion.

4.  The sealing structure according to claim 3 further comprising an annular member disposed between the opposing surface and the gasket main body portion, wherein the gasket main body portion is compressed by the end surface in the first member and the annular member, and the gasket further comprises a third annular convex portion that protrudes from the gasket main body portion toward an annular gap between the body portion and the annular member, and is spaced apart from the opposing surface in a state before being compressed by the first member, and comes into close contact with the opposing surface when compressed by the first member.

5.  The sealing structure according to claim 3, wherein an annular protruding portion that protrudes toward the first member is formed on the opposing surface, the gasket main body portion is compressed by the end surface in the first member and the annular protruding portion, and the gasket further comprises a third annular convex portion that protrudes from the gasket main body portion toward an annular gap between the body portion and the annular protruding portion, and is spaced apart from the opposing surface in a state before being compressed by the first member, and comes into close contact with the opposing surface when compressed by the first member.

100

120

110                130

*Fig. 1*

500   120   520   530   610

100

(600)

510

620                130

110

*Fig. 2*

*Fig. 3*

*Fig. 4*

500 120 520 530 610

100a

(600)

510

110

630

130

140 620

*Fig. 5*

*Fig. 6*

*Fig. 7*

*Fig. 8*

**INTERNATIONAL SEARCH REPORT**

| International application No. |
| --- |
| PCT/JP2014/078540 |

A. CLASSIFICATION OF SUBJECT MATTER
*F16J15/10*(2006.01)i, *F16L23/036*(2006.01)i

According to International Patent Classification (IPC) or to both national classification and IPC

B. FIELDS SEARCHED

Minimum documentation searched (classification system followed by classification symbols)
F16J15/10, F16L23/036

Documentation searched other than minimum documentation to the extent that such documents are included in the fields searched

| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2001-165320 A (Denso Corp.), 22 June 2001 (22.06.2001), paragraphs [0022] to [0045]; fig. 1 (Family: none) | 1-5 |
| Y | JP 08-109985 A (Nishikawa Rubber Co., Ltd.), 30 April 1996 (30.04.1996), paragraphs [0004] to [0007]; fig. 1 to 2 (Family: none) | 1-5 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 23 January 2015 (23.01.15) | 03 February 2015 (03.02.15) |

| Name and mailing address of the ISA/ | Authorized officer |
| --- | --- |
| Japan Patent Office 3-4-3,Kasumigaseki,Chiyoda-ku, Tokyo 100-8915,Japan | Telephone No. |

Form PCT/ISA/210 (second sheet) (July 2009)

**INTERNATIONAL SEARCH REPORT**

| International application No. |
| --- |
| PCT/JP2014/078540 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | Microfilm of the specification and drawings annexed to the request of Japanese Utility Model Application No. 100414/1985 (Laid-open No. 016488/1986) (Rieber & Son A/S), 30 January 1986 (30.01.1986), specification, page 8, lines 12 to 19; page 13, line 15 to page 14, line 5; page 15, lines 8 to 18; page 16, line 8 to page 17, line 2; fig. 7, 10 & JP 51-85068 A     & US 4030872 A & DE 2538278 A     & FR 2282983 A & CA 1053719 A | 1-5 |
| Y A | JP 50-35686 B1 (Orenstein-Koppel und Lübecker Maschinenbau AG), 18 November 1975 (18.11.1975), column 2, line 35 to column 3, line 5; fig. 1 & GB 1193808 A     & FR 2006544 A | 2,4 1,3,5 |
| Y A | JP 2007-303518 A (Yazaki Corp.), 22 November 2007 (22.11.2007), paragraphs [0008] to [0021]; fig. 1, 4 (Family: none) | 2,5 1,3,4 |
| Y A | JP 2004-092678 A (Nitta Moore Co.), 25 March 2004 (25.03.2004), paragraphs [0032] to [0034]; fig. 4 (Family: none) | 2,4,5 1,3 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007170570 A
- JP 2001165320 A